# EUROPÄISCHE PATENTSCHRIFT

(11) **EP 1 366 337 B1**
(45) Veröffentlichungstag und Bekanntmachung des Hinweises auf die Patenterteilung: **02.11.2005**
(21) Anmeldenummer: 02729960.1
(22) Anmeldetag: 05.03.2002
(51) Int. Cl.: F41H 5/04, B32B 18/00, B32B 15/00

(54) **VERFAHREN ZUR HERSTELLUNG EINES GEPANZERTEN FORMKÖRPERS AUS EINEM MEHRSCHICHTIGEN VERBUNDBLECH**
METHOD FOR PRODUCING AN ARMOURED SHAPED BODY CONSISTING OF A MULTILAYER COMPOSITE SHEET METAL
PROCEDE DE FABRICATION D'UN CORPS MOULE BLINDE EN TOLE COMPOSITE MULTICOUCHE

(30) Priorität: 08.03.2001 DE 10111108
(43) Veröffentlichungstag der Anmeldung: 03.12.2003
(73) Patentinhaber: Deutsche Titan GmbH, 45143 Essen (DE)
(72) Erfinder: SIBUM, Heinz, 45257 Essen (DE)
(74) Vertreter: Knauf, Rudolf
(86) Internationale Anmeldenummer: PCT/EP2002/002378
(87) Internationale Veröffentlichungsnummer: WO 2002/070982

(56) Entgegenhaltungen:
- DE-A- 4 031 550
- DE-C- 19 632 598
- US-A- 3 804 034
- US-A- 3 871 026
- US-A- 4 869 974

## Beschreibung

Die Erfindung betrifft ein Verfahren zur Herstellung eines gepanzerten Formkörpers aus einem mehrschichtigen Verbundblech, das eine erste Schicht aus hochfestem Stahl und mindestens eine mit dieser verbundene zweite Schicht aus Titan oder einer Titanlegierung aufweist.

Gepanzerte Formkörper werden beispielsweise im Fahrzeugbau verwendet, um die Fahrzeuginsassen vor Beschuss zu schützen. Dabei streben die Konstrukteure eine möglichst hohe Sicherheit der Insassen bei einem möglichst geringen Fahrzeuggewicht an.

Ein gewichtssparender Beschussschutz in Form eines mehrschichtigen Verbundbauteils ist aus der RU 21 02 688 C1 bekannt. Dieses Verbundbauteil besteht aus einem Trägerblech aus hochfestem Stahl und einem mit diesem verbundenen Blech aus einer mittel- oder hochfesten Titanlegierung, das die Außenseite des Verbundbauteils bildet und auf das deshalb Geschosse unmittelbar auftreffen. Dieses Verbundbauteil besteht aus einem Trägerblech aus hochfestem Stahl und einem mit diesem verbundenen Blech aus einer mittel- oder hochfesten Titanlegierung, Das Dickenverhältnis zwischen dem Blech aus der Titanlegierung und dem hochfesten Stahlblech liegt dabei zwischen 0,5 und 1,0.

Bei einem anderen bekannten gewichtssparenden Beschussschutz in Form eines dreilagigen Verbundbauteils (US 4 364 300) sind die Verhältnisse ähnlich. Bei diesem Verbundbauteil besteht die nicht dem Beschuss direkt ausgesetzte innere Lage aus Stahlblech und die darauf angeordnete mittlere Lage aus einem Nichteisenmaterial, wie Titan. Die hier vorgesehene zusätzliche, dem Beschuss unmittelbar ausgesetzte äußere Lage besteht ebenfalls aus Stahlblech. Die mittlere Lage aus Titan, das eine um ein Vielfaches kleinere Dichte als Stahl hat, hat eine um ein Vielfaches größere Dicke als die äußeren Stahlbleche. Das äußere Stahlblech hat eine Härte von 500-600 BHN, während das innen liegen Stahlblech nur halb so hart ist.

Bei einer anderen bekannten ballistischen Schutzpanzerung (DE 40 31 550 A1) in Form eines schichtartig aufgebauten Werkstoffverbundes besteht der Werkstoffverbund aus wenigstens einer dem Beschuß ausgesetzten schlagfesten Keramiklage und wenigstens einer Blechlage aus einem vergüteten legierten Stahl. Diese beiden Lagen sind miteinander über eine vergleichsweise dünne Blechlage aus einer Formgedächtnislegierung durch Hartlöten miteinander verbunden. Die mittlere Lage dient dabei dem Eigenspannungsabbau im Bereich der Hartlötung. Als geeignetes Material für die mittlere Lage kann eine Nickel-Titan-Legierung verwendet werden. Da solche Legierungen teuer sind, werden sie sehr sparsam eingesetzt. Beim Ausführungsbeispiel hat die Zwischenlage eine Dicke von 0,3 mm, während die Keramiklage und die Stahlblechlage eine Dicke von 4 mm bzw. 2 mm haben.

Ferner sind verschiedene Methoden zur Befestigung einer Hartstoffschicht aus anorganischen Hartstoffen auf einem Trägerwerkstoff aus Metall bekannt. Bei einer ersten Methode (EP 0 322 719 A1; US 3 804 034 A Grundlage für den Anspruch 1) werden als Hartstoffe Karbide, Karbide etc, insbesondere Titanborid, Titandiborid, Titankarbid, Siliziumkarbid etc. verwendet, die unter Anwendung von Wärme und Druck aufgetragen werden. Nach der zweiten Methode (DE 21 62 692 A1 = US 3 871 026 A), werden Formbauteile aus hochlegiertem Stahl oder einer hochfesten Aluminiumlegierung mit Oxiden, Karbiden, Nitriden etc. festhaftend zu beschichten, indem diese Hartstoffe mittels eines Hochtemperatur-Spritzbeschichtungsverfahren, insbesondere mit Flammspritz-, Plasmaspritz- oder Explosionsverfahren aufgetragen.

Schließlich ist ein leichtgewichtiger Beschussschutz aus einer Vielzahl von Drahtlagen aus mit Abdeckblechen Aluminium bekannt (US-A 3 826 172), von denen das dem Beschuss unmittelbar ausgesetzte äußere Abdeckblech eine Hartstoffschicht zum Schutz des weichen Aluminiums trägt.

Der Nachteil von solchen bekannten Verbundbauteilen besteht darin, dass ihr Schicht/Lagenaufbau nicht darauf ausgelegt ist, die kinetische Energie eines auftreffenden Geschosses optimal aufzufangen. Auf der Erfindung basierende Beschussversuche haben nämlich gezeigt, dass ein optimaler Schutz vor dem auftreffenden Geschoss dann erreicht werden kann, wenn die unterschiedlichen Kontaktphasen zwischen Geschoss und den einzelnen Schichten des Verbundbleches berücksichtigt werden. So kommt es in der ersten Kontaktphase (Auftreffphase) darauf an, dass die Auftrefffläche des Geschosses innerhalb kurzer Zeit maximal vergrößert wird. In der zweiten Kontaktphase (Verformungsphase) soll die kinetische Energie des Geschosses möglichst weitgehend in Verformungsenergie umgewandelt werden. In der dritten Kontaktphase (Abblockphase) soll schließlich die die kinetische Energie des Geschosses in Verformungsenergie umwandelnde Schicht (Verformungsschicht) so abgestützt werden, dass ihr Durchbeulen oder Aufreißen (Durchschuss) verhindert wird.

Der Erfindung liegt die Aufgabe zugrunde, ein Verfahren zur Herstellung von vergleichsweise leichten gepanzerten Formkörpern aus einem mehrschichtigen Verbundblech anzugeben, der auch für höchste Beschussklassen einen verlässlichen Schutz vor dem Durchdringen von Geschossen bietet.

Ausgehend von dem vorstehend diskutierten Stand der Technik wird diese Aufgabe durch folgende Verfahrensschritte gelöst:
a) Walzplattieren eines ersten Bandes aus hochfestem, durch Wärmebehandlung aushärtbarem Stahl mit einem zweiten Band aus Titan oder einer Titanlegierung zu einem Verbundband;
b) Umformen mindestens einer vom Verbundband abgelängten Verbundtafel zu einem Formkörper;
c) Aufbringen einer Hartstoffschicht hoher Härte auf der Oberfläche der Titan- oder Titanlegierungsschicht des Formkörpers;
d) Wärmebehandlung des Formkörpers.

Die Hartstoffschicht sorgt auf Grund ihrer hohen Härte, die man mit gehärteten Stählen nicht annähernd erreichen kann, dafür, dass in der ersten Kontaktphase, wenn das Geschoss auftrifft, die Auftrefffläche-in kürzester Zeit stark vergrößert wird, weil sich das Geschoss wesentlich stärker verformt als beim Auftreffen auf eine zwar hochfeste, aber eine wesentlich geringere Härte aufweisende Schicht, wie es im Stand der Technik vorgesehen ist. Wegen der Vergrößerung der Auftrefffläche des Geschosses verteilt sich die vom Geschoss auf den Formkörper übertragene Kraft auf eine größere Fläche, so dass es zu einer deutlich geringeren flächenspezifischen Belastung der unter der Hartstoffschicht liegenden Schicht aus Titan oder Titanlegierung kommt. Diese Schicht aus Titan oder einer Titanlegierung ist in der zweiten Kontaktphase des Geschosses diejenige Schicht, welche einen möglichst großen Teil der kinetischen Energie des Geschosses in Verformungsenergie umsetzt. Durch Auswahl einer geeigneten Titanlegierung können die Eigenschaften dieser Schicht optimal an diese Aufgabe angepasst werden. Die Schicht aus hochfestem Stahl hat schließlich die Aufgabe, in der dritten Kontaktphase die Verformungsschicht so abzustützen, dass es nicht zu einer Durchbeulung oder gar einem Aufreißen des Formkörpers (Durchschuss) kommt. Da als Material für das Stahlband eine Stahllegierung gewählt wird, die gut verformbar ist und erst im Rahmen einer Wärmebehandlung des Formkörpers vollständig aushärtet und ihre maximale Festigkeit erreicht, wird einerseits die Umformung der Verbundtafeln zum Formkörper gut realisiert, und andererseits werden durch eine abschließende Wärmebehandlung die hochfesten Eigenschaften des Stahls vollständig zur Entfaltung gebracht. Solche Eigenschaften haben z.B. Stähle, die einen sogenannten Bake-Hardening-Effekt aufweisen. Die von dem Band abgelängten Verbundtafeln lassen sich auch deshalb problemlos zu Formkörpern umformen, weil die Hartstoffschicht noch nicht aufgebracht ist. Da die Hartstoffschicht erst nach der Umformung der Verbundtafeln zu Formkörpern aufgebracht wird, und nicht umgekehrt, gibt es nämlich weder Probleme mit dem Auftragen der Hartstoffschicht noch besteht die Gefahr des Abplatzens der ausgehärteten spröden Hartstoffschicht Das Verfahren erlaubt es deshalb auch, die Stückkosten gepanzerter Formkörper mit geringem Gewicht klein zu halten.

Diese belastungsoptimierte Auswahl der verschiedenen Materialien für die einzelnen Schichten schafft auch die Voraussetzung dafür, dass sich ein optimales Verhältnis von Beschusssicherheit und Gewicht ergibt. Unter dem Gesichtspunkt eines möglichst geringen Gewichtes sollte von den beiden das Verbundblech bildenden Partnern das Titanblech dicker als das Stahlblech sein. Die Dicke des Titanbleches sollte zwischen 1mm und 4mm und die des Stahlbleches zwischen 1 mm und 3 mm liegen.

Als Material für die Hartstoffschicht eignen sich neben dem erwähnten FeB-Pulver besonders TiN-, TiO₂-, TiC-, oder Al₂O₃-Pulver. Auch Mischungen dieser Pulver stellen ein geeignetes Beschichtungsmaterial dar. Der besseren Haftung wegen kann das Beschichtungsmaterial teilweise der Gitterstruktur des tragenden Bandes angepasst sein. Für das Auftragen des Materials für die Hartstoffschicht eignet sich insbesondere das Flammspritzen. Diese Auftragsmethode ist besonders dann geeignet, wenn das Hartstoffmaterial in Pulverform vorliegt.

FeB-Pulver stellt ein kostengünstiges Beschichtungsmaterial dar. Durch eine Wärmebehandlung lässt sich die aufgebrachte FeB-Schicht mit dem Titan aus der Trägerschicht zu TiB₂ (Titanborit) chemisch umsetzen, so dass eine Hartstoffschicht mit hoher Härte entsteht. Dieses Material zeichnet sich darüber hinaus durch eine gute Haftung zur Trägerschicht aus. Die Wärmebehandlung erfolgt vorzugsweise gleichzeitig mit der für die Aushärtung der Stahlschicht erforderlichen Wärmebehandlung.

## Patentansprüche

1. Verfahren zum Herstellen eines gepanzerten Formkörpers, **gekennzeichnet durch** folgende Verfahrensschritte:
a) Walzplattieren eines ersten Bandes aus hochfestem, **durch** Wärmebehandlung aushärtbarem Stahl mit einem zweiten Band aus Titan oder einer Titanlegierung zu einem Verbundband;
b) Umformen mindestens einer vom Verbundband abgelängten Verbundtafel zu einem Formkörper;
c) Aufbringen einer Hartstoffschicht hoher Härte auf der Oberfläche der Titan- oder Titanlegierungsschicht des Formkörpers;
d) Wärmebehandlung des Formkörpers.

2. Verfahren nach Anspruch 1, **dadurch gekennzeichnet, dass** die Hartstoffschicht durch Flammspritzen aufgebracht wird, wobei als Beschichtungsmaterial TiN-, TiO₂-, TiC-, Al₂O₃-, FeB-Pulver oder Mischungen davon verwendet werden.

3. Verfahren nach Anspruch 2, **dadurch gekennzeichnet, dass** bei Verwendung von FeB-Pulver als Beschichtungsmaterial der Formkörper im Anschluss an das Aufbringen der Hartstoffschicht einer solchen Wärmebehandlung unterzogen wird, bei der sich das FeB mit dem Titan der Trägerschicht zu TiB₂ (Titanborit) umsetzt.

## Claims

1. A method for producing an armoured shaped body, **characterised by** the following method steps:
a) roll-bonding of a first strip made of high-strength steel hardenable by heat treatment with a second strip made of titanium or a titanium alloy into a composite strip;
b) shaping of at least one composite plate cut to length from the composite strip into a shaped body;
c) deposition of a hard-material layer of great hardness on the surface of the titanium or titanium-alloy layer of the shaped body.
d) heat treatment of the shaped body.

2. The method according to claim 1, **characterised in that** the hard-material layer is deposited by flame spraying, whereby TiN-, TiO₂-, TiC-, Al₂O₃-, FeB-powder or mixtures thereof are used as the coating material.

3. The method according to claim 2, **characterised in that**, when FeB powder is used as the coating material, the shaped body is subjected to a heat treatment following the deposition of the hard-material layer, in which heat treatment the FeB is converted with the titanium of the substrate into TiB₂ (titanium borite).

## Revendications

1. Procédé de fabrication d'un élément moulé blindé, **caractérisé par** les étapes de procédé suivantes :
a) plaquage par laminage d'une première bande composée d'acier haute résistance, pouvant être durci par un traitement thermique, avec une seconde bande composée de titane ou d'un alliage de titane pour former une bande composite,
b) transformation d'au moins une plaque composite sectionnée à partir de la bande composite pour former un élément formé,
c) application d'une couche de substance dure d'une dureté supérieure sur la surface de la couche de titane ou d'alliage de titane de l'élément moulé,
d) traitement thermique de l'élément formé.

2. Procédé selon la revendication 1, **caractérisé en ce que** la couche de substance dure est appliquée par projection à la flamme, de la poudre de TiN, TiO₂, TIC, Al₂O₃, FeB ou des mélanges de celles-ci étant utilisés comme matériau de revêtement.

3. Procédé selon la revendication 2, **caractérisé en ce que**, lors de l'utilisation de poudre de FeB comme matériau de revêtement, l'élément formé est soumis, à la suite de l'application de la couche de substance dure, à un traitement thermique tel que pendant celui-ci le FeB se transforme en TiB₂ (borure de titane) avec le titane du substrat.
